Europäisches Patentamt

European Patent Office

Office européen des brevets

(19)

(11) Veröffentlichungsnummer: **0 248 289**
**B1**

(12) ## EUROPÄISCHE PATENTSCHRIFT

(45) Veröffentlichungstag der Patentschrift:
24.01.90

(51) Int. Cl.⁴: **F16H 3/76**

(21) Anmeldenummer: 87107457.1

(22) Anmeldetag: 22.05.87

(54) Zahnradgetriebe mit stufenlos veränderbarem Uebersetzungsverhältnis.

(30) Priorität: 27.05.86 CH 2130/86

(43) Veröffentlichungstag der Anmeldung:
09.12.87 Patentblatt 87/50

(45) Bekanntmachung des Hinweises auf die Patenterteilung:
24.01.90 Patentblatt 90/4

(84) Benannte Vertragsstaaten:
AT BE CH DE ES FR GB IT LI NL SE

(56) Entgegenhaltungen:
DD-A- 19 458
DE-A- 2 533 706
DE-A- 3 241 676
DE-C- 873 340
DE-C- 875 114
DE-C- 1 075 396
US-E- 21 532

(73) Patentinhaber: Braunschweiler, Hans Georg,
Schwandenstrasse 36, CH-8802 Kilchberg ZH(CH)

(72) Erfinder: Braunschweiler, Hans Georg,
Schwandenstrasse 36, CH-8802 Kilchberg ZH(CH)

(74) Vertreter: Patentanwälte Schaad, Balass & Partner,
Dufourstrasse 101 Postfach, CH-8034 Zürich(CH)

ACTORUM AG

**Beschreibung**

Die Erfindung betrifft ein Zahnradgetriebe nach dem Oberbegriff des Patentanspruches I.

Es sind zahlreiche Getriebe dieser Art vorbekannt, doch keines der bekannten Getriebe gewährleistet eine ausschliesslich formschlüssige Verbindung zwischen Antriebs- und Abtriebswelle unter Verwendung herkömmlicher Verzahnungen.

Beispielsweise ist aus der DE-C 875 II4 ein Getriebe der eingangs genannten Art bekannt geworden, bei dem ein Getrieberad in Zahnsegmente aufgeteilt ist, die je in einem festen Lager gelagert sind und auf einer Treibscheibe längs Radien derselben gleitend angeordnet sind, wobei die Drehachse der Treibscheibe gegenüber jener des festen Lagers quer verstellbar ist. Im Getriebezug zwischen der Antriebs- und der Abtriebswelle dieses Getriebes ist jedoch eine kraftschlüssige, das Drehmoment übertragende Kupplung vorgesehen, die mit Schrägflächen zusammenwirkende Klemmkugeln aufweist. Andere mit Kreisschiebung und/oder Kurbeln arbeitende Getriebe, wie beispielsweise in DE-C 873 340 und I 075 396 beschrieben, ergeben bei einer konstanten Antriebsdrehzahl eine mehr oder weniger oszillierende Abtriebsdrehzahl und weisen darüberhinaus exzentrisch umlaufende Massen auf. Dies gilt auch für das aus der DE-A 2 533 706 vorbekannte Getriebe.

Bei diesem Stand der Technik ist es als ein Zweck der Erfindung anzusehen, ein Getriebe der eingangs genannten Art zu schaffen, das trotz der Möglichkeit, das Uebersetzungsverhältnis stufenlos zu ändern, eine formschlüssige Verbindung von der Antriebs- bis zur Abtriebswelle, unter ausschliesslicher Verwendung herkömmlicher Verzahnungen gewährleistet.

Zu diesem Zweck weist das vorgeschlagene Getriebe die im Kennzeichen des Patentanspruches I angegebene Merkmalskombination auf.

Merkmale bevorzugter Ausführungsformen sind den abhängigen Ansprüchen zu entnehmen.

Nachstehend ist das vorgeschlagene Getriebe rein beispielsweise anhand der Zeichnung näher beschrieben. Es zeigt:

Fig. I ein Schema einer Ausführungsform des Getriebes in einer ersten Stellung.

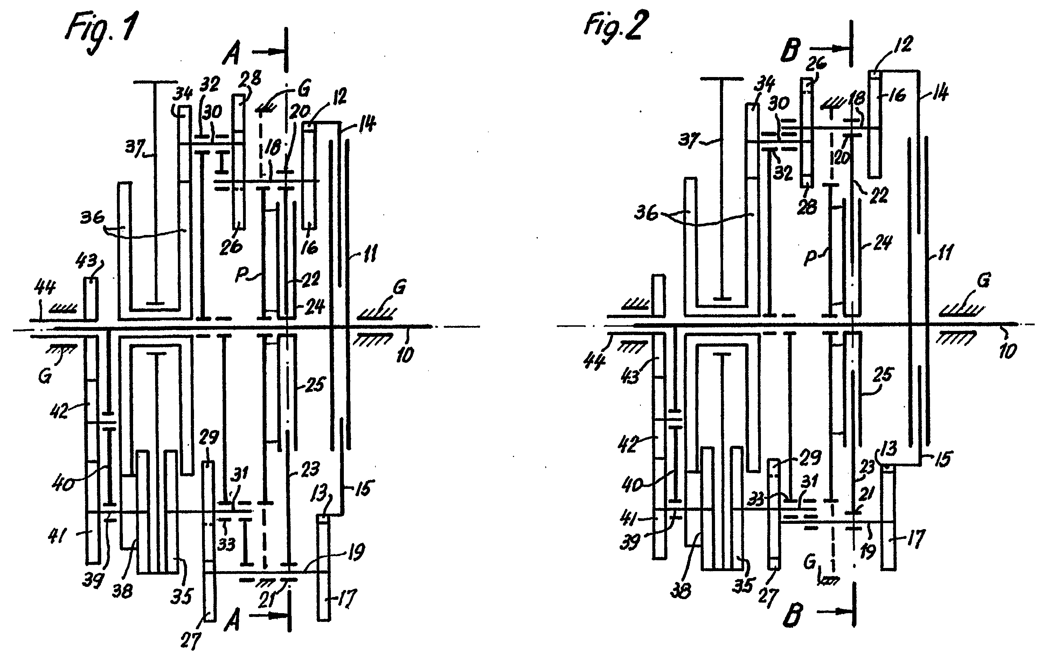

Fig. 2 das Getriebe der Fig. I in einer anderen Stellung,

Fig. 3 Eine Ansicht der Fig. I aus der Richtung A-A,

Fig. 4 Eine Ansicht der Fig. 2 aus der Richtung B-B,

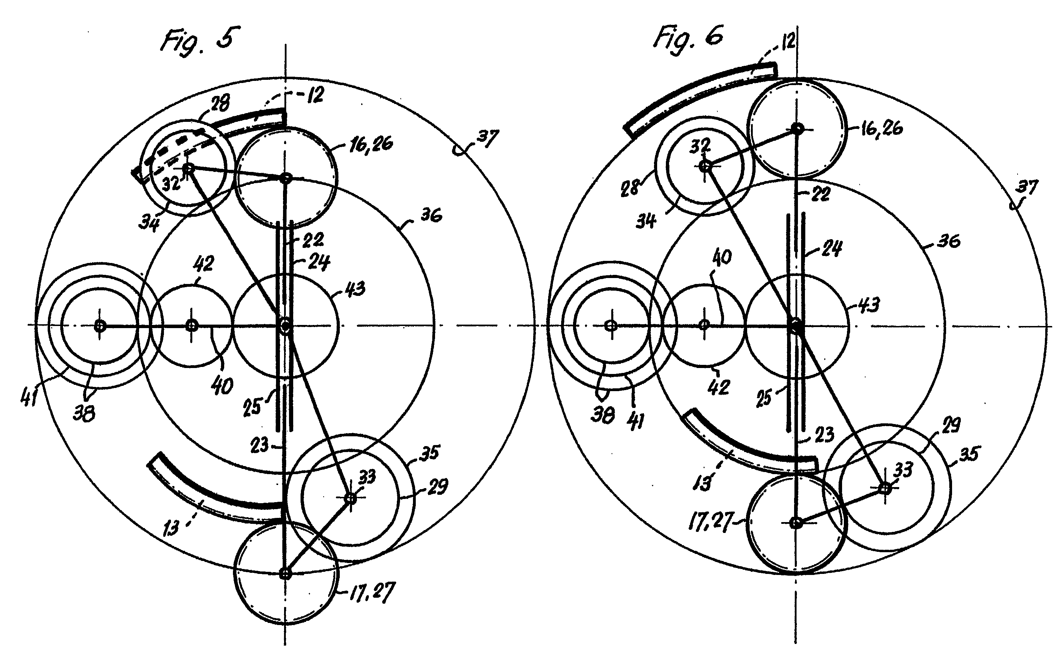

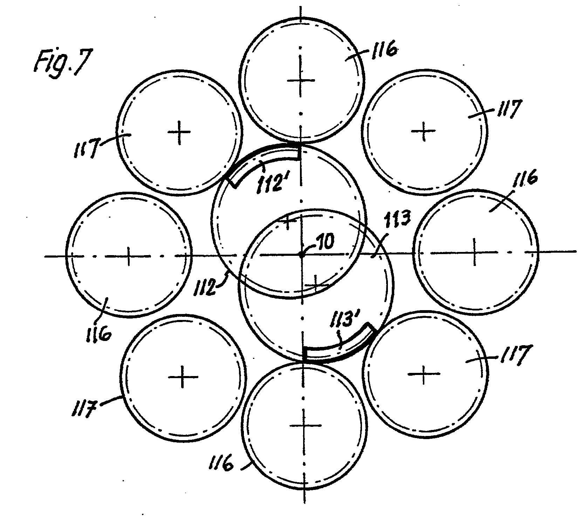

Fig. 5 u.6 vereinfachte, schematische Ansichten des Getriebes gemäss Fig. I und 2 zur Abtriebsseite hin, und

Fig. 7 Teile einer Ausführungsvariante.

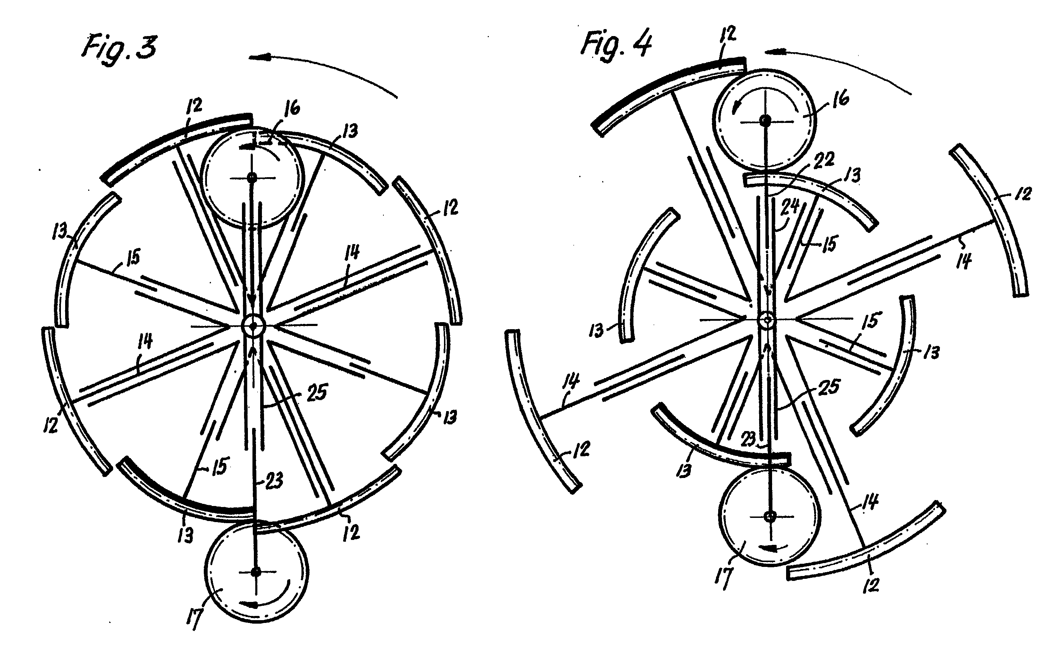

Das in Fig. I und 2 dargestellte Getriebe besitzt eine Antriebswelle I0, auf der eine nur schematisch angegebene Trägerscheibe II drehfest montiert ist. Auf dieser Trägerscheibe II, sind vier (vgl. Fig. 3 u. 4) kreisbogenförmige und innenverzahnte Zahnsegmente I2 und vier kreisbogenförmige, aussen-verzahnte Zahnsegmente I3 derart montiert, dass sie geführt und gegenleich radial verschiebbar sind. Dies ist in Fig. I und 2 dadurch angedeutet, dass die Trägerscheibe II durch 2 Linien dargestellt ist, zwischen welche ein eines der Zahnsegmente I2 bzw. I3 tragendes Führungselement I4 bzw. I5 eingreift. Die Zahnsegmente I2 liegen in einer Ebene und die Zahnsegmente I3 in einer axial versetzt angeordneten Ebene.

Die Zahnsegmente I2 gelangen der Reihe nach in Eingriff mit einem Planetenrad I6 und die Zahnsegmente I3 mit einem Planetenrad I7. Die Wellen I8, I9 dieser Planetenräder I6 bzw. I7 sind in Lagerungen 20, 2I gelagert, die ihrerseits bezüglich der Antriebswelle I0 radial verschiebbar sind, jedoch drehfest an das nur schematisch angegebene Gehäuse G gekoppelt sind. Dieses ist dadurch angedeutet, dass die Lagerungen 20, 2I am Ende eines Führungsarmes 22 bzw. 23 sitzen, die in Führungshülsen 24 bzw. 25 verschiebbar sind, die ihrerseits mit einer am Gehäuse G befestigten Platte P verbunden sind.

Auf den Wellen I8 bzw. I9 sitzt auch das erste Zahnrad 26 bzw. 27 eines Vorgeleges, welche erste Zahnräder gleich sein können wie die Planetenräder I6 bzw. I7.

Mit den ersten Zahnrädern 26 bzw. 27 kämmen zweite Zahnräder 28 bzw. 29, deren Wellen 30 bzw. 3I in Lagern 32 bzw. 33 gelagert sind, die nach Massgabe der radialen Stellung der ersten Zahnräder 26 bzw. 27 diesen folgen können. An den Enden der Wellen 30 bzw. 3I sitzt je ein Zahnrad 34 bzw. 35.

Das Zahnrad 34 kämmt mit der einen Aussenverzahnung eines Doppelzahnrades 36, das frei drehbar auf der Antriebswelle I0 gelagert ist. Das Zahnrad 35 hingegen kämmt mit der einen Innenverzahnung eines auf der Nabe des Doppelzahnrades 36 frei drehbar gelagerten Doppelzahnrades 37. Die Doppelzahnräder 36 und 37 bilden die Ausgangsglieder eines Differentialgetriebes, dessen Ausgleichsglied durch ein weiteres, aussenverzahntes Doppelzahnrad 38 gebildet ist. Dieses Doppelzahnrad 38 kämmt mit seiner einen Aussenverzahnung mit der anderen Aussenverzahnung des Doppelzahnrades 36 und mit seiner anderen Aussenverzahnung mit der anderen Innenverzahnung des Doppelzahnrades 37. Das Doppelzahnrad 38 sitzt auf einer Welle 39, die ihrerseits am Ende eines mit der Antriebswelle I0 drehfest verbundenen und von dieser radial abstehendem Arm 40 gelagert ist.

Auf der Welle 39 sitzt schliesslich ein weiteres Zahnrad 4I, das die mit der Eigendrehung überlagerte Umlaufbewegung des Ausgleichsgliedes (Doppelzahnrad 38) über nochmals ein im Arm 40 drehbar gelagertes Zahnrad 42 auf ein Ausgangszahnrad 43 überträgt. Das Ausgangsrad 43 sitzt auf einer als Hohlwelle ausgebildeten Abtriebswelle 44, in der auch das Ende der Antriebswelle I0 gelagert ist.

Das Doppelzahnrad 38 führt eine Umlaufbewegung aus, deren Umlaufzahl der Drehzahl der Antriebswelle I0 entspricht. Zusätzlich führt das Doppelzahnrad 38 eine Eigendrehung mit einer Drehzahl aus, die unter anderen Dingen von der

Drehzahldifferenz zwischen den Doppelzahnrädern 36 und 37 abhängig ist.

Das Uebersetzungsverhältnis vom Planetenrad l6 bis zum Doppelzahnrad 36 ist konstant. Ebenso ist auch das Uebersetzungsverhältnis vom Planetenrad l7 bis zum Doppelzahnrad 37 konstant. Nun ist aber die Drehzahl des Planetenrades l6 abhängig vom radialen Abstand der Zahnsegmente l2 von der Antriebswelle l0, und die Drehzahl des Planetenrades l7 vom Abstand der Zahnsegmente l3 von der Antriebswelle l0. Die Umfangsgeschwindigkeit dieser beiden Zahnsegmente nimmt mit wachsendem Abstand zu und mit vermindertem Abstand ab.

Durch geeignete Wahl der Grössen aller Getriebeelemente ist es möglich, dass die Abtriebswelle 44 in einer Extremstellung der Zahnsegmente l2 , l3 gegensinnig zur Antriebswelle l0 dreht und im Zuge des Ueberganges in die andere Extremstellung der Zahnsegmente l2, l3 über die Drehzahl 0 in eine gleichsinnige Drehung wie Antriebswelle l0 übergeht.

Wie der Fig. 7 zu entnehmen ist, ist das Prinzip der "stufenlos verstellbaren Umfangsgeschwindigkeiten" auch zu verwirklichen, indem die Zahnsegmente l2 durch ein innen- oder aussenverzahntes Stirnzahnrad ll2 und die Zahnsegmente l3 durch ein entsprechendes Stirnzahnrad ll3 ersetzt wird, wobei die Achsen dieser Stirnzahnräder in bezug auf die Antriebswelle l0 einander diametral gegenüberliegend angeordnet sind und in ihrem Abstand von der Antriebswelle l0 gegengleich verstellbar sind. Diesen gegebenenfalls keine Eigendrehung, sondern nur eine Umlaufbewegung ausführenden Stirnzahnräder ll2, ll3 ist je ein Satz von vier Planetenrädern ll6 bzw. ll7 zugeordnet. Anstelle der vollständigen Stirnzahnrädern ll2, ll3 können auch nur entsprechende kreisbogenförmige Zahnsegmente ll2 - ll3 vorgesehen sein.

Andererseits ist auch möglich, die Zahnsegmente l2, l3 bzw. die Stirnräder ll2, ll3 gegen eine Umlaufbewegung zu sichern und dafür die zugeordneten Planetenräder l6, l7 bzw. ll6, ll7 durch die Antriebswelle in eine Umlaufbewegung zu bringen, bei der sie durch Abwälzung auf den Zahnsegmenten l2 bzw. l3 oder den Stirnrädern ll2, ll3 zusätzlich zu einer Eigendrehung veranlasst werden.

## Patentansprüche

l. Zahnradgetriebe mit stufenlos veränderbarem Uebersetzungsverhältnis, mit einer Antriebswelle (l0) und einer Abtriebswelle (44) und mit verzahnten Elementen (l2, l3; ll2, ll3), deren radialer Abstand von der Achse der Antriebswelle (l0) veränderbar ist, gekennzeichnet durch folgende Kombination:
    a) Es sind mindestens zwei Sätze von verzahnten Elementen (l2, l3; ll2, ll3) vorgesehen, deren radialer Abstand von der Achse von der Antriebswelle (l0) satzweise stufenlos verstellbar ist,
    b) jedem Satz der verzahnten Elemente (l2, l3; ll2, ll3) ist zumindest ein mit dem Element dieses Satzes in Eingriff gelangendes Planetenrad (l6, l7) zugeordnet, wobei

    c) die Antriebswelle (l0) eine relative Umlaufbewegung zwischen den verzahnten Elementen (l2, l3; ll2, ll3) und den Planetenrädern (l6, l7) erzeugt, und
    d) die Anzahl und Anordnung der verzahnten Elemente (l2, l3; ll2, ll3) und der Planetenräder (l6, l7; ll6, ll7) jedes Satzes so getroffen ist, dass eines der Planetenräder stets im Eingriff mit einem verzahnten Element des ihm zugeordneten Satzes ist, wobei
    e) vom Planetenrad (l6, l7) jedes Satzes ein Vorgelege (26, 28, 34; 27, 29, 35) ausgeht, das formschlüssig an eines der Ausgangsglieder (36; 37) eines Differentialgetriebes gekoppelt ist, welche Ausgangsglieder (36; 37) frei drehbar gelagert sind, und wobei
    f) das mit den Ausgangsgliedern (36, 37) des Differentialgetriebes kämmende Ausgleichsglied (38) drehbar am Ende eines mit der Antriebswelle (l0) drehfesten, radial abstehenden Armes (40) drehbar gelagert ist, und
    g) über einen dessen Eigendrehung und Umlaufbewegung erfassenden Getriebezug (4l, 42, 43) an die Abtriebswelle gekoppelt ist.

2. Zahnradgetriebe nach Patentanspruch l, dadurch gekennzeichnet, dass die verzahnten Elemente jedes Satzes je durch eine Mehrzahl von von der Antriebswelle zu einer Umlaufbewegung angetriebenen Zahnsegmenten (l2, l3), gebildet sind und dass den Zahnsegmenten jedes Satzes ein radial verschiebbares Planetenrad (l6, l7) zugeordnet ist.

3. Zahnradgetriebe nach Patentanspruch 2, dadurch gekennzeichnet, dass die Zahnsegmente (l2) des einen Satzes innenverzahnt und die Zahnsegmente (l3) des anderen Satzes aussenverzahnt sind.

4. Zahnradgetriebe nach Patentansprüche 2 oder 3, dadurch gekennzeichnet, dass der radiale Abstand der Zahnsegmente (l2) des einen Satzes und jener der Zahnsegmente (l3) des anderen Satzes von der Achse der Antriebswelle (l0) zwangsläufig gegengleich verstellbar ist.

5. Zahnradgetriebe nach einem der Patentansprüche 2 bis 4, dadurch gekennzeichnet, dass die beiden Sätze je die gleiche Anzahl Zahnsegmente aufweisen und dass die Zahnsegmente (l2) des einen Satzes um den halben Winkel zwischen benachbarten Zahnsegmenten dieses Satzes inbezug auf die Zahnsegmente (l3) des anderen Satzes verdreht angeordnet sind.

6. Zahnradgetriebe nach einem der Patentansprüche l bis 5, dadurch gekennzeichnet, dass die Achsen der Antriebswelle (l0), der verzahnten Elemente (l2, l3; ll2, ll3), der Planetenräder (l6, l7; ll6, ll7), der Ausgangsglieder (36; 37) des Differentialgetriebes sowie der Abtriebswelle (44) parallel zueinander sind.

7. Zahnradgetriebe nach Patentanspruch l, dadurch gekennzeichnet, dass jedes verzahnte Element aus einem innen- oder aussenverzahnten Stirnzahnrad (ll2, ll3) besteht, dem mehrere Planetenräder (ll6, ll7) zugeordnet sind, wobei die Achsen der Stirnzahnräder (ll2, ll3) bezüglich der Achse der Antriebswelle (l0) einander diametral gegenüberliegend angeordnet sind und deren radialer Abstand von letzterer gegengleich veränderbar ist, wobei die Achsen der jedem der Stirnzahnräder (II2, II3) zugeordneten Planetenräder (II6, II7) auf einem zur Achse zur Antriebswelle (I0) konzentrischen Kreis liegen, dessen Durchmesser von der Stellung des jeweiligen Stirnzahnrades (II2, II3) bestimmt ist.

8. Zahnradgetriebe nach Patentanspruch 6, dadurch gekennzeichnet, dass die Achse des Ausgleichsgliedes (38) des Differentialgetriebes parallel zur Achse der Antriebswelle (I0) ist.

9. Zahnradgetriebe nach einem der vorangehenden Ansprüche, dadurch gekennzeichnet, dass die Antriebs- und die Abtriebswelle (I0; 44) gleichachsig sind.

I0. Zahnradgetriebe nach einem der Ansprüche 2 bis 5, dadurch gekennzeichnet, dass die Zahnsegmente (I2, I3) des einen und des anderen Satzes an einer gemeinsamen, drehfest mit der Antriebswelle (I0) verbundenen Trägerscheibe (II) montiert sind und in dieser in radial verlaufenden Führungen verschiebbar sind.

## Claims

1. Toothed gearing with a continuously variable transmission ratio having an input shaft (10) and an output shaft (44) and having toothed elements (12, 13; 112, 113) whose radial distance from the axis of the input shaft (10) is variable, characterised by the following combination:

   a) at least two sets of toothed elements (12, 13; 112, 113) are provided whose radial distance from the axis of the input shaft (10) is continuously variable in sets,

   b) with each set of toothed elements (12, 13; 112, 113) there is coupled at least one planet wheel (16, 17) engaged with an element of that set, whereby

   c) the input shaft (10) effects relative rotational movement between the toothed elements (12, 13; 112, 113) and the planet wheels (16, 17), and

   d) the proportion and arrangement of the toothed elements (12, 13; 112, 113) and the planet wheels (16, 17; 116, 117) of each set is so determined that one of the planet wheels is always engaged with a toothed element of the set to which it is coupled, whereby

   e) to the planet wheel (16, 17) of each set there is coupled gearing (26, 28, 34; 27, 29, 35), which is positively coupled to one of the output members (36; 37) of a differential gear, which output members (36; 37) are freely rotatable, and whereby

   f) the compensating member (38) meshing with the output members (36, 37) of the differential gear is rotatably mounted at the end of a radially extending arm (40) rotatable with the input shaft (10), and

   g) is coupled to the output shaft via a train of gears (41, 42, 43) accommodating its pivoting and rotation movement.

2. Toothed gearing according to claim 1, characterised in that the toothed elements of each set are formed respectively by a plurality of tooth segments (12, 13) driven by the input shaft in a rotational movement, and that a radially movable planet wheel (16, 17) is coupled to a tooth segment of each set.

3. Toothed gearing according to claim 2, characterised in that the tooth segments (12) of the one set are internally toothed and the tooth segments (13) of the other set are externally toothed.

4. Toothed gearing according to claim 2 or 3, characterised in that the radial distance of the tooth segments (12) of the one set and of each of the tooth segments (13) of the other set is automatically adjustable in diametric opposition relative to the axis of the input shaft (10).

5. Toothed gearing according to any one of claims 2 to 4, characterised in that both sets have respectively the same number of tooth segments and that the tooth segments (12) of the one set are displaced relatively to the tooth segments (13) of the other set by half the angle between adjoining tooth segments of this set.

6. Toothed gearing according to any one of claims 1 to 5, characterised in that the axes of the input shaft (10), the toothed elements (12, 13; 112, 113), the planet wheels (16, 17; 116, 117), the output members (36; 37) of the differential gear and the output shaft (44) are parallel to one another.

7. Toothed gearing according to claim 1, characterised in that each toothed element consists of an internally or externally toothed front gear wheel (112, 113) to which several planet wheels (116, 117) are coupled, wherein the axes of the front gear wheels (112, 113) are arranged diametrically opposite to one another with reference to the axis of the input shaft (10) and have a radial distance from the latter which is adjustable in diametric opposition, wherein the axes of the planet wheels (116, 117) each coupled to the front gear wheel (112, 113) lie on a circle concentric with the axis of the input shaft (10) whose diameter is determined by the position of the front gear wheel (112, 113) concerned.

8. Toothed gearing according to claim 6, characterised in that the axis of the compensation member (38) of the differential gear is parallel to the axis of the input shaft (10).

9. Toothed gearing according to any one of the preceding claims, characterized in that the input shaft and the output shaft (10; 44) are coaxial.

10. Toothed gearing according to any one of claims 2 to 5, characterised in that the tooth segments (12, 13) of the one set and of the other set are mounted on a general carrying disc connected in fixed rotation with the input shaft (10) and are movable in this in radially extending guides.

## Revendications

1. Transmission à engrenages comportant un rapport de transmission continûment variable, un arbre menant (10) et un arbre mené (44) ainsi que des éléments dentés (12, 13; 112, 113) dont l'espacement radial de l'axe de l'arbre menant (10) est modifiable, caractérisée par la combinaison suivante:

   (a) il est prévu au moins deux groupes d'éléments dentés (12, 13; 112, 113) dont l'espacement radial de l'axe de l'arbre menant (10) est réglable continûment par groupe;

   (b) à chaque groupe d'éléments dentée (12, 13; 112, 113) est associé au moins un pignon satellite (16, 17) entrant en prise avec l'élément de ce groupe;

c) l'arbre menant (10) produit un mouvement de rotation relatif entre les éléments dentés (12, 13; 112, 113) et les pignons satellites (16, 17);

d) le nombre et la disposition des éléments dentés (12, 13; 112, 113) et des pignons satellites (16, 17) de chaque groupe sont tels qu'un des pignons satellites soit constamment en prise avec un élément denté du groupe qui lui est associé;

e) du pignon satellite (16, 17) de chaque groupe part un arbre intermédiaire (26, 28, 34; 27, 29, 35) qui est accouplé, avec complémentarité de formes, avec un des organes de sortie (36; 37) d'un mécanisme différentiel, lesdits organes de sortie (36; 37) étant montés de façon à tourner fous;

f) l'organe d'équilibrage (38) en prise avec les organes de sortie (36; 37) du mécanisme différentiel est monté de façon tournante à l'extrémité d'un bras (40) faisant saillie radialement et fixe en rotation par rapport à l'arbre menant (10); et

g) il est accouplé avec l'arbre mené par l'intermédiaire d'un train d'engrenages (41, 42, 43) captant sa rotation propre et son mouvement orbital.

2. Transmission à engrenages selon la revendication 1, caractérisée en ce que les éléments dentés de chaque groupe sont constitués chacun par plusieurs segments dentés (12, 13) entraînés dans un mouvement orbital par l'arbre menant et en ce qu'un pignon satellite (16, 17) déplaçable radialement est associé aux segments dentés de chaque groupe.

3. Transmission à engrenages selon la revendication 2, caractérisée en ce que les segments dentés (12) d'un groupe sont à denture intérieure et les segments dentés (13) de l'autre groupe sont à denture extérieure.

4. Transmission à engrenages selon la revendication 2 ou 3, caractérisée en ce que l'espacement radial des segments dentés (12) d'un groupe, et celui des segments dentés (13) de l'autre groupe, par rapport à l'axe de l'arbre menant (10) sont réglables obligatoirement en sens inverses l'un de l'autre et avec des amplitudes identiques.

5. Transmission à engrenages selon l'une des revendications 2 à 4, caractérisée en ce que les deux groupes comportent chacun le même nombre de segments dentés et en ce que les segments dentés (12) d'un groupe sont décalés angulairement par rapport aux segments dentés (13) de l'autre groupe de la moitié de l'angle entre des segments dentés adjacents du groupe cité en premier.

6. Transmission à engrenages selon l'une des revendications 1 à 5, caractérisée en ce que les axes de l'arbre menant (10), des éléments dentés (12, 13; 112, 113), des pignons satellites (16, 17; 116, 117), des organes de sortie (36; 37) du mécanisme différentiel et de l'arbre mené (44) sont mutuellement parallèles.

7. Transmission à engrenages selon la revendication 1, caractérisée en ce que chaque élément denté se compose d'un engrenage droit à denture intérieure ou extérieure (112, 113), duquel sont associés plusieurs pignons satellites (116, 117), les axes des engrenages droit (112, 113) étant situés dans des positions diamétralement opposées par rapport à l'axe de l'arbre menant (10) et leurs espacements radiaux par rapport à cet axe étant modifiable en sens inverses et avec des amplitudes identiques, tandis que les axes des pignons satellites (116, 117) associés à chacun des engrenages droits (112, 113) sont situés sur un cercle concentrique à l'axe de l'arbre menant (10) et dont le diamètre est déterminé par la position de l'engrenage droit correspondant (112, 113).

8. Transmission à engrenages selon la revendication 6, caractérisée en ce que l'axe de l'organe d'équilibrage (38) du mécanisme différentiel est parallèle à l'axe de l'arbre menant (10).

9. Transmission à engrenages selon l'une des revendications précédentes, caractérisée en ce que l'arbre menant (10) et l'arbre mené (44) sont coaxiaux.

10. Transmission à engrenages selon l'une des revendications 2 à 5, caractérisée en ce que les segments dentés (12, 13) de l'un et l'autre groupes sont montés sur un disque de support (11) commun, relié de façon non tournante à l'arbre menant (10) et sont déplaçables dans celui-ci par translation dans des guides orientés radialement dans ledit arbre.

Fig.1

Fig.2

EP 0 248 289 B1

Fig. 3

Fig. 4

EP 0 248 289 B1

Fig. 5

Fig. 6

EP 0 248 289 B1

Fig.7